# EUROPEAN PATENT APPLICATION

(11) **EP 1 646 050 A1**
(43) Date of publication of application: **12.04.2006**
(21) Application number: 05077286.2
(22) Date of filing: 07.10.2005
(51) Int. Cl.: G11B 27/10, G11B 27/32

(54) **Storage medium storing multimedia data for providing moving image reproduction function and programming function, and apparatus and method for reproducing moving image**

(30) Priority: 09.10.2004 KR 2004080727
(71) Applicant: Samsung Electronics Co., Ltd., Suwon-si, Gyeonggi-Do (KR)
(72) Inventor: Kim, Kwang-min, Kwangak-gu, Seoul (KR); Lee, Jung-ho, c/o 204-404 Sejong Regencyvill Apt., Yongin-si, Gyeonggi-do (KR); Lee, Du-hee, c/o 101-612 Shinyoung Czerny Apt., Seoul (KR)
(74) Representative: Hylarides, Paul Jacques

(57) **Abstract**

A storage medium storing multimedia data for providing a moving image reproduction function and a programming function, and an apparatus and method for reproducing a moving image from the storage medium the apparatus including a storage unit which stores the program data downloaded from the storage medium or from a network and download management information indicating whether the downloaded program data can be executed independently without the storage medium; a reading unit which reads the downloaded program data and the download management information from the storage unit; and a reproduction unit which reproduces the downloaded program data with reference to the download management information. Therefore, it is possible to provide not only a typical moving image reproduction function but also a user interaction function and/or other additional functions to a user and to independently execute a program application downloaded to a local storage from a storage medium or from an external database via a network without the storage medium.

## Description

### Background of the invention

An aspect of the present invention relates to reproduction of multimedia data, and more particularly, to a storage medium storing multimedia data for providing a moving image reproduction function and a programming function, and an apparatus and method for reproducing the moving image.

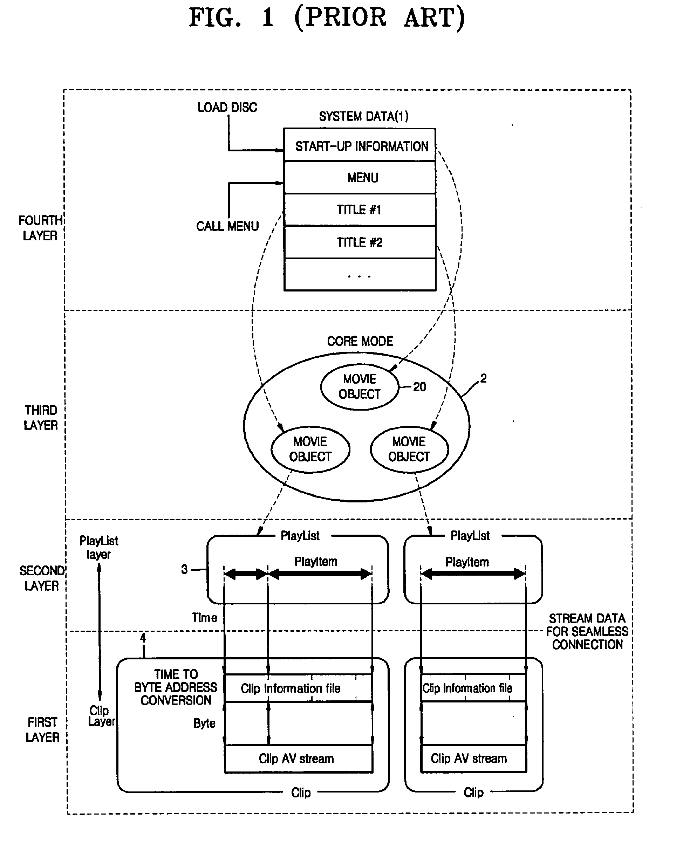

FIG. 1 is a diagram illustrating the format of multimedia data for reproducing a typical moving image, such as a high-definition movie. Referring to FIG. 1, the multimedia data includes a plurality of moving image data, i.e., playlists 3 and clips 4, navigation data 2, and system data 1 and includes four different layers, i.e., first, second, third, and fourth layers where the playlists 3, the clips 4, the navigation data 2, and the system data 1 respectively belong.

The system data 1, which belongs to the fourth layer of the multimedia data, may be formed as an index table 1 which includes start-up information, that is information designating a movie object to be reproduced first and a plurality of title information regarding a plurality of titles when a storage medium, such as a disc, is inserted into an apparatus for reproducing a moving image from a storage medium (hereinafter referred to as the moving image reproduction apparatus). The index table 1 is an uppermost-layer table that defines a plurality of titles and a menu and also includes location information specifying the locations of beginning portions of the titles and location information specifying the location of a beginning portion of the menu. If a new title is chosen from the menu in response to user input or a navigation command, the moving image reproduction apparatus examines a plurality of title information in an index table and reproduces a moving image with reference to the examined result.

The navigation data, which belongs to the third layer of the multimedia data, includes a plurality of movie objects 20 which include a plurality of navigation commands used for reproducing moving image data. The navigation commands included in a movie object are used for initiating the reproduction of the playlists 3, switching between the movie objects 20, or managing the reproduction of the playlists 3 based on the user's preferences.

The playlists 3, which belong to the second layer of the multimedia data, define units in which moving image data is reproduced. Moving image data is recorded in units of clips in a continuous space of a storage medium. The playlists 3 may be units of reproduction each including a portion of a clip or a plurality of clips. Each of the playlists 3 may include a plurality of sub-units of reproduction labeled "playitems". A playitem may designate a portion of a clip to be reproduced or portions of a plurality of clips to be reproduced. The playlists 3 may define an order in which their respective sets of playitems are to be reproduced. Alternatively, in a case where some of the playitems of each of the playlists 3 are chosen to be reproduced by the user or chosen to be reproduced through default settings of the moving image reproduction apparatus, the playlists 3 may define an order in which their respective sets of chosen playitems are to be reproduced.

The clips 4, which belong to the first layer of the multimedia data, include units in which moving image data is to be recorded. Each of the clips 4 includes a clip audio/video (AV) stream and a clip information file. The clip AV stream includes audio data, video data, subtitle data, and graphic data. The clip information data includes attribute information of the clip AV stream and an entry point map used for converting reproduction time information into byte address information.

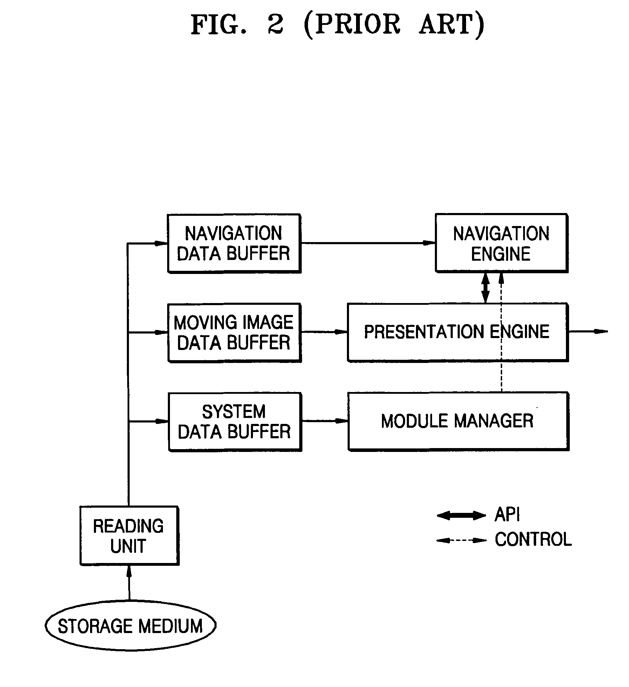

FIG. 2 is a block diagram of a typical moving image reproduction apparatus. Referring to FIG. 2, the moving image reproduction apparatus includes: a reading unit which reads data from a storage medium; a buffer unit which temporarily stores the read data; a navigation engine which controls the reproduction of a moving image with reference to navigation data; a module manager which controls the navigation engine to handle title changes in response to initial execution, a user's selection or changes in the navigation data by reading system data; and a presentation engine which decodes moving image data and displays the decoded moving image data. The moving image reproduction apparatus may also include a blender (not shown) which lays decoded video data and decoded graphic data over a single screen.

The operation of the moving image reproduction apparatus of FIG. 2 will now be described with reference to FIG. 1.

Referring to FIGS. 1 and 2, when a storage medium is inserted into the moving image reproduction apparatus, the module manager reads the index table 1 corresponding to system data from among a plurality of multimedia data stored in the storage medium. The module manager examines start-up information included in the index table 1 and controls the navigation engine to execute a movie object 20 designated by the start-up information.

The navigation engine reads the movie object 20 and interprets a navigation command stored in the movie object 20 and controls the presentation engine to reproduce a moving image in response to the navigation command.

The presentation engine reads moving image data, i.e., a playlist file 3 and a clip file 4, and reproduces a clip AV stream with reference to information included in each of the playlist file 3 and the clip file 4. If a new title is chosen from a menu in response to user input or a navigation command, the module manager may control the navigation engine to reproduce the new title. In this manner, the moving image reproduction apparatus can reproduce a high-quality moving image by reading the multimedia data from the storage medium.

In recent years, the demands for storage media to provide not only a typical moving image reproduction function but also a user interaction function allowing a user to intervene in the reproduction of moving image data from a storage medium have steadily increased. Conventionally, moving image data can be reproduced from a storage medium only in a predetermined manner determined by a content manufacturer, thus leaving too little room for a user to intervene in the way the moving image data is reproduced and failing to provide various additional services other than a typical moving image reproduction function, such as a function to download various content related to predetermined moving image content and a function to display information regarding the predetermined moving image content.

In order to allow user interaction and provide various additional services, program applications written in various programming languages, such as the C language, Java, HTML, and other script languages, need to be provided to storage media together with moving image data. These program applications enable moving image data stored in a storage medium to be reproduced in different ways according to user interaction, instead of being reproduced only in a certain manner determined by a content manufacturer. Therefore, not only a program application but also control information used for controlling the program application to be executed in a certain manner desired by the content manufacturer must be provided to the storage medium.

In addition, in order to add a new program application function to a storage medium or provide new content to the storage medium through an internet site established by a content manufacture who manufactured the storage medium, the storage medium needs to download a program application from a network to a local storage device of a moving image reproduction apparatus and then to execute the downloaded program application.

### Summary of the invention

An aspect of the present invention provides a storage medium storing multimedia data for providing a moving image reproduction function and a programming function, which provides a user interaction function and/or other additional functions, and an apparatus and method for reproducing a moving image.

Another aspect of the present invention provides a method and apparatus for executing a program application downloaded from a storage medium or a network to a local storage of an apparatus for reproducing a moving image.

According to another aspect of the present invention, there is provided an apparatus for reproducing a moving image from a storage medium in which reproduction mode data used for reproducing moving image data and program data used for providing a user interaction function and/or other additional functions using the moving image data are stored. The apparatus includes: a storage unit which stores the program data downloaded from the storage medium or from a network and download management information indicating whether the downloaded program data can be executed independently without the storage medium; a reading unit which reads the downloaded program data and the download management information from the storage unit; and a reproduction unit which reproduces the downloaded program data with reference to the download management information.

According to another aspect of the present invention, if the download management information indicates that the downloaded program data can be executed independently, the reproduction unit may reproduce the downloaded program data without the storage medium. On the other hand, if the download management information indicates that the downloaded program data cannot be executed independently, the reproduction unit may control a program engine to notify a user that the downloaded program data cannot be executed without the storage medium.

According to another aspect of the present invention, the download management information may be included in application management information used for controlling the execution of the downloaded program data, and the application management information may be included in the downloaded program data.

According to another aspect of the present invention, the download management information may be stored separately from application management information used for controlling the execution of the downloaded program data, and the application management information may be included in the downloaded program data.

According to another aspect of the present invention, there is provided a method of reproducing a moving image from a storage medium in which reproduction mode data used for reproducing moving image data and program data used for providing a user interaction function and/or other additional functions using the moving image data are stored. The method includes: searching a storage unit which stores the program data downloaded from the storage medium or from a network and download management information indicating whether the downloaded program data can be executed independently without the storage medium for program data chosen by a user; examining download management information corresponding to the chosen program data in the storage unit; and reproducing the chosen program data with reference to the download management information corresponding to the chosen program data.

According to another aspect of the present invention, the reproducing may include: reproducing the chosen program data without the storage medium if the download management information corresponding to the chosen program data indicates that the chosen program data can be executed independently; and controlling an apparatus for reproducing a moving image from a storage medium to notify the user that the chosen program data cannot be executed without the storage medium if the download management information corresponding to the chosen program data indicates that the downloaded program data cannot be executed independently.

According to another aspect of the present invention, there is provided a storage medium including: reproduction mode data used for reproducing moving image data; and program data used for providing a user interaction function and/or other additional functions using the moving image data. The program data includes download management information indicating whether the program data is downloadable to a storage unit of an apparatus for reproducing a moving image from a storage medium and whether, after downloaded to the storage unit, the program data can be executed independently without a storage medium from which the program data is downloaded.

According to another aspect of the present invention, the storage medium may also include system data used for controlling the execution of the reproduction mode data and the program data.

Additional aspects and/or advantages of the invention will be set forth in part in the description which follows and, in part, will be obvious from the description, or may be learned by practice of the invention.

### Brief description of the drawings

These and/or other aspects and advantages of the invention will become apparent and more readily appreciated from the following description of the embodiments, taken in conjunction with the accompanying drawings of which:
FIG. 1 is a diagram illustrating the format of typical multimedia data for reproducing a moving image;
FIG. 2 is a block diagram of a typical apparatus for reproducing a moving image from a storage medium;
FIG. 3 is a diagram illustrating the format of multimedia data for providing a moving image reproduction function and a programming function according to an exemplary embodiment of the present invention;
FIGS. 4A through 4C are diagrams illustrating various examples of download management information according to an exemplary embodiment of the present invention, which is used for executing without a storage medium a program application downloaded to a local storage of an apparatus for reproducing a moving image from a storage medium;
FIG. 5 is a block diagram illustrating the format of the download management information of FIG. 4A, 4B, or 4C;
FIG. 6 is a block diagram of an apparatus for reproducing a moving image from a storage medium which executes without the storage medium a program application downloaded to its local storage using download management information, according to an exemplary embodiment of the present invention;
FIGS. 7A and 7B are diagrams illustrating examples of the format of program application data downloaded to a local storage of an apparatus for reproducing a moving image from a storage medium according to an exemplary embodiment of the present invention; and
FIG. 8 is a flowchart illustrating a method of executing without a storage medium a program application downloaded to a local storage using download management information according to an exemplary embodiment of the present invention.

Reference will now be made in detail to the present embodiments of the present invention, examples of which are illustrated in the accompanying drawings, wherein like reference numerals refer to the like elements throughout. The embodiments are described below in order to explain the present invention by referring to the figures.

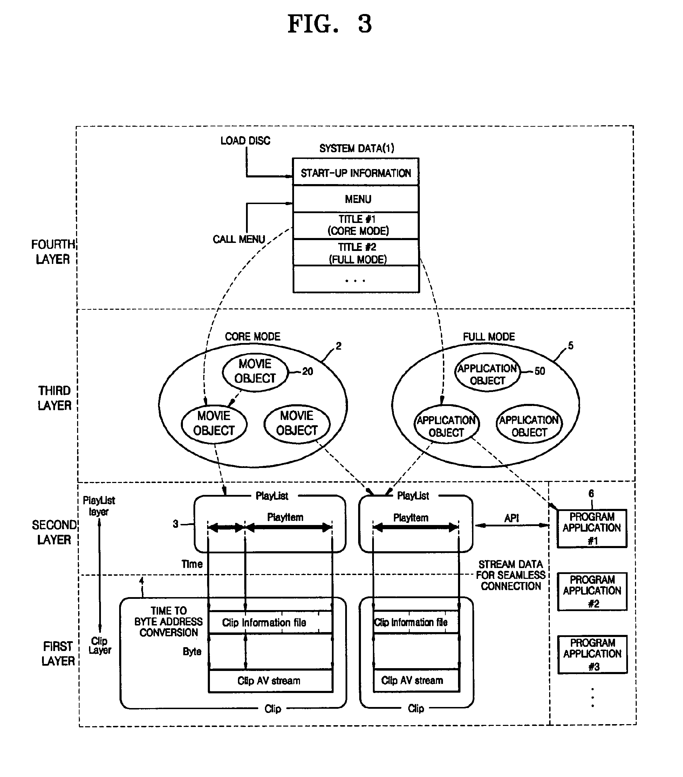

FIG. 3 is a block diagram illustrating the format of multimedia data for providing a moving image reproduction function and a programming function according to an exemplary embodiment of the present invention. Referring to FIG. 3, the multimedia data includes moving image data, i.e., playlists 3 and clips 4, navigation data 2, and system data 1 and includes four different layers, i.e., first, second, third, and fourth layers to which the playlists 3, the clips 4, the navigation data 2, and the system data 1 respectively belong. The multimedia data also includes a plurality of program applications 6 for providing a programming function and full-mode navigation data 5. The full-mode navigation data 5 includes a plurality of application objects 50.

When reproducing moving image data in a typical approach, each of the playlists 3 is read using a navigation command stored in a movie object 20, and it is determined in what order and when the moving image data is to be reproduced with reference to the playlists 3. A clip information file designated by reproduction time information is read according to the determined reproduction order, and the reproduction time information is converted into byte address information. Thereafter, a clip AV stream 4 corresponding to the byte address information is read, thereby reproducing a moving image. This type of reproduction in which moving image data is reproduced at a moment of time determined by a content manufacturer is referred to as core-mode reproduction or movie-mode reproduction.

On the other hand, a program application having a programming function may be executed during the reproduction of moving image data. This type of reproduction is referred to as full-mode reproduction. For full-mode reproduction, the multimedia according to an exemplary embodiment of the present invention may include a plurality of program applications 6 and a plurality of application objects 50. In addition, the multimedia according to an exemplary embodiment of the present invention may also include a plurality of application objects 50 with a programming function as well as a plurality of movie objects 20 used for reproducing moving image data. Therefore, in full-mode reproduction, each of the program applications 6 may provide a user interaction function, which allows user intervention in the reproduction of moving image data from a storage medium, and other additional functions with the aid of an application program interface (API) for a certain playlist during the reproduction of moving image data from the storage medium. In other words, it is possible to provide predetermined information or execute a certain program application 6 in synchronization with a certain movie scene.

For example, when the user clicks on a mobile phone carried by an actor or actress while watching the movie 'Matrix', an advertisement application regarding the manufacturer of the mobile phone may be automatically executed. Alternatively, when a splendid landscape with mountains covered with snow is displayed as a background image during reproduction of the movie "the Lord of the Rings", a program application 6 that provides travel information regarding a region corresponding to the background image and information regarding event promotions taking place in the region may be automatically executed.

Each of the program applications 6 may be executed during reproduction of moving image data or may be executed using the moving image data. Alternatively, each of the program applications 6 may be executed independently of the reproduction of the moving image data. Since the program applications 6 are written in programming languages, such as the C language and Java, it is possible to provide additional functions other than a typical moving image reproduction function and to leave much room for user interaction.

An apparatus for reproducing a moving image from a storage medium (hereinafter referred to as the moving image reproduction apparatus) may directly execute each of the program applications 6 stored in a storage medium illustrated in FIG. 3. Alternatively, the moving image reproduction apparatus may download the program applications 6 from the storage medium to its local storage and execute the downloaded program applications 6. Alternatively, the moving image reproduction apparatus may download the program applications 6 from an external database to its local storage via a network and then execute the downloaded program applications 6. In some cases, there is a need for the moving image reproduction apparatus to download a program application to its local storage from a storage medium or from an external database via a network in order to add new program application functions or obtain new content from an Internet site established by a content manufacturer who manufactured the storage medium. In this case, the program application downloaded to the local storage of the moving image reproduction apparatus is closely related to the storage medium from which the program application is downloaded and thus is generally executed when moving image data is reproduced from the storage medium by using an identifier of the storage medium. A program application is generally designed so that it can be executed in association with the storage medium from which it is downloaded.

In some other cases, however, there is a need for the moving image reproduction apparatus to execute the program application downloaded to its local storage independently of the reproduction of moving image data from the storage medium. An apparatus and method for independently executing without the storage medium a program application stored in a local storage of a moving image reproduction apparatus according to an exemplary embodiment of the present invention will now be described in detail.

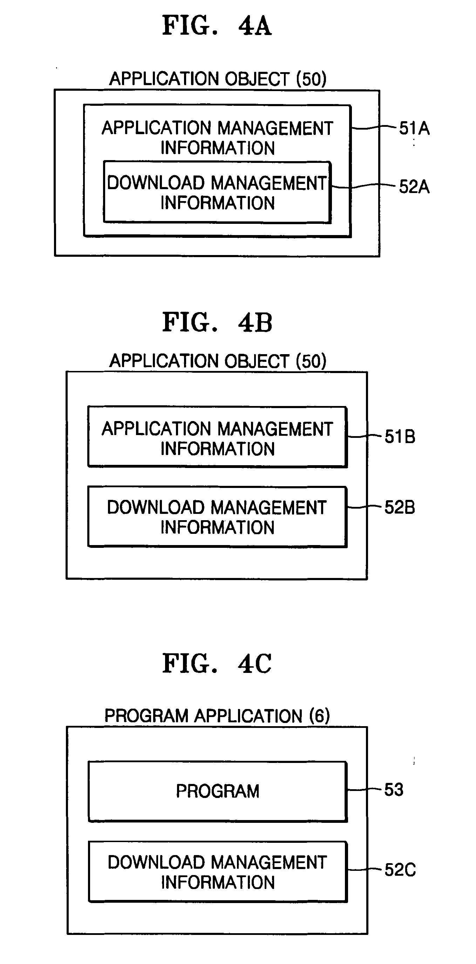

FIGS. 4A through 4C are diagrams illustrating examples of download management information according to an exemplary embodiment of the present invention which is used for executing without a storage medium a program application downloaded to a local storage of a moving image reproduction apparatus. The download management information may be included in multimedia data stored in a storage medium, and the location of the download management information within the multimedia data may be altered.

Specifically, FIG. 4A illustrates an application object 50 included in multimedia data stored on a storage medium. Referring to FIG. 4A, download management information 52A may be included in application management information 51A which is included in an application object 50 and is used for controlling a program application to be executed according to specification of a manufacturer.

Referring to FIG. 4B, download management information 52B may be included in the application object 50 separately from application management information 51B.

Referring to FIG. 4C, download management information 52C may be included in a program application 6.

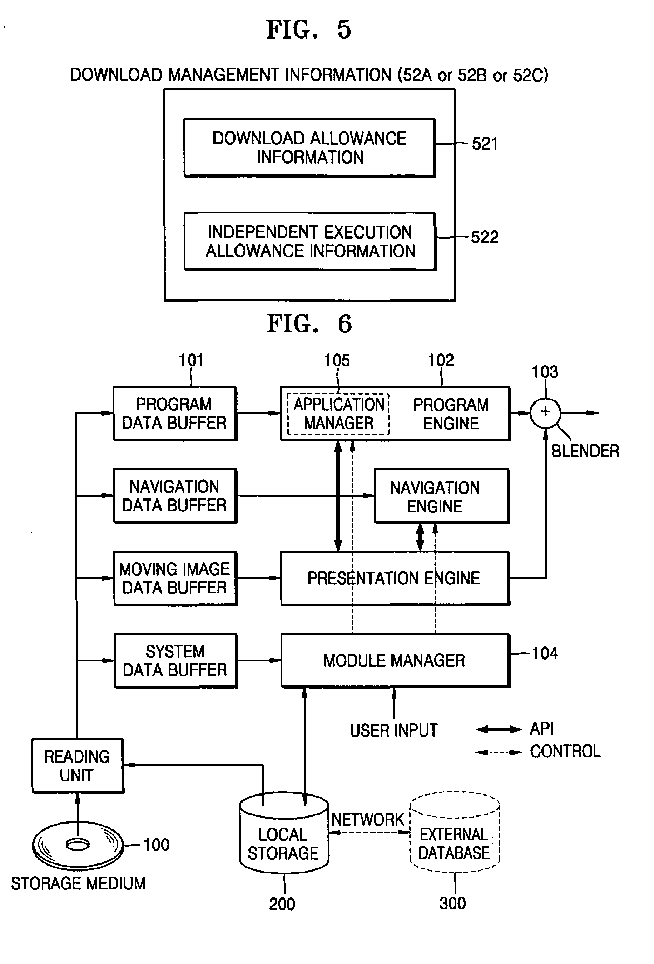

FIG. 5 is a diagram illustrating the format of the download management information 52A, 52B, or 52C of FIG. 4A, 4B, or 4C. Referring to FIG. 5, the download management information 52A, 52B, or 52C includes download allowance information 521 indicating whether downloading of a program application from a storage medium to a local storage of a moving image reproduction apparatus is allowed and independent execution allowance information 522 indicating whether independent execution of a program application downloaded to the local storage of the moving image reproduction apparatus without the storage medium is allowed.

Accordingly, the download allowance information 521 indicates whether a content manufacturer allows a program application stored in a storage medium to be downloaded to a local storage of a moving image reproduction apparatus. If the program application is allowed to be freely downloaded from the storage medium, even an unauthorized person may have illegal access to multimedia data stored in the storage medium using the program application. Thus, a content manufacturer may determine whether to allow the downloading of a program application from a storage medium or not.

The independent execution allowance information 522 indicates whether the content manufacturer allows the program application stored in the local storage of the moving image reproduction apparatus to be executed independently without the storage medium. For example, once movie preview data and a program application related to the movie preview data are downloaded from an internet site or a storage medium provided by a movie studio, they can be executed regardless of whether the storage medium is currently inserted into a moving image reproduction apparatus, thereby providing various information to a user without the storage medium. However, if a program application downloaded from a storage medium to a local storage of the moving image reproduction apparatus is used for providing additional functions using multimedia data already stored in the storage medium, the downloaded program application may not operate properly without the storage medium. In order to solve this problem, it is necessary for a content manufacturer to specify whether a program application that he or she has manufactured can operate without a storage medium where it is stored. In the present embodiment, the independent execution allowance information 522 indicates whether a content manufacturer allows a program application downloaded to a local storage of a moving image reproduction apparatus to be executed independently without a storage medium from which the program application is downloaded.

In the present embodiment, information indicating whether a content manufacturer allows a program application downloaded to a local storage of a moving image reproduction apparatus to be executed without a storage medium from which the program application is downloaded, i.e., the download management information 52A, 52B, or 52C, is provided. When a program application is downloaded from a storage medium or an external database to the local storage of a moving image reproduction apparatus, the download management information 52A, 52B, or 52C indicating whether the program application can be executed independently without the storage medium or the external database from which the program application is downloaded is also stored in the local storage. As described above, the download management information 52A, 52B, or 52C may be included in an application object as part of application management information or may be included in the application object separately from the application management information as illustrated in FIGS. 4A and 4B. The download management information 52A, 52B, or 52C may include the download allowance information 521 and the independent execution allowance information 522.

The structure of a moving image reproduction apparatus using the above-mentioned multimedia data structure according to an exemplary embodiment of the present invention will now be described.

FIG. 6 is a block diagram of a moving image reproduction apparatus which executes a program application downloaded to its local storage using download management information according to an exemplary embodiment of the present invention. Referring to FIG. 6, the moving image reproduction apparatus includes: a reading unit which reads data from a storage medium; a buffer unit which temporarily stores the read data; a navigation engine which controls reproduction of moving image data with reference to navigation data; a module manager 104 which controls the navigation engine to handle title changes in response to initial execution, a user's selection or changes in the navigation data by reading system data; and a presentation engine which decodes the moving image data and outputs the decoded moving image data to a screen.

The moving image reproduction apparatus may also include a program engine 102 which is used for executing a program application and a program data buffer 101. A plurality of program engines 102 may be needed to execute one or more program applications together. For example, in order to execute a Java application and an HTML application together, a Java virtual machine which can execute a Java application and a browser engine which can execute an HTML application are needed.

The moving image reproduction apparatus may also include a blender 103 which lays the executed results provided by the program engine 102 and the decoded moving image data output by the presentation engine over one screen.

In order to provide a moving image programming function, the program engine 102 may include an application manager 105 which controls the execution of a program application using an application object corresponding to the program application. In detail, the application manager 105 reads application management information included in the application object and controls the execution of a program application corresponding to the application object with reference to the application management information. In the present embodiment, the module manager 104 and the application manager 105 are implemented as being separate from each other. However, the module manager 104 may be integrated into the application manager 105, in which case, the application manager 105 not only performs its own functions but also performs functions of the module manager 104.

The moving image reproduction apparatus also includes a local storage 200 which can store a program application downloaded from a storage medium 100 or an external database 300.

The module manager 104 searches the local storage 200 storing a plurality of program applications, displays a program application list only including the program applications that can be chosen by the user based on the search results, and receives selection information regarding one of the program applications chosen by the user. The module manager 104 may control the program engine 102 to execute the chosen program application. In detail, the module manager 104 may examine independent execution information included in download management information. Thereafter, if the independent execution allowance information 522 indicates that the chosen program application can be executed independently without the storage medium 100, the module manager 104 may control the program engine 102 to execute the chosen program application independently without the storage medium 100. Otherwise, the module manager 104 may notify the user that the chosen program application cannot be executed independently without the storage medium 100.

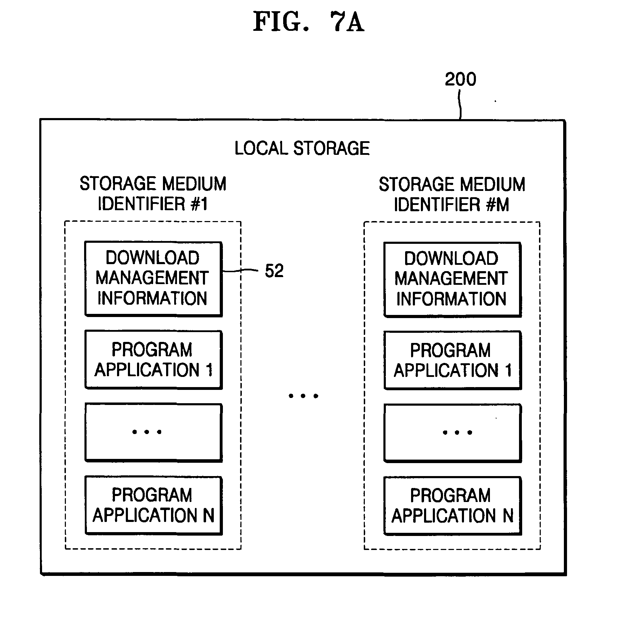

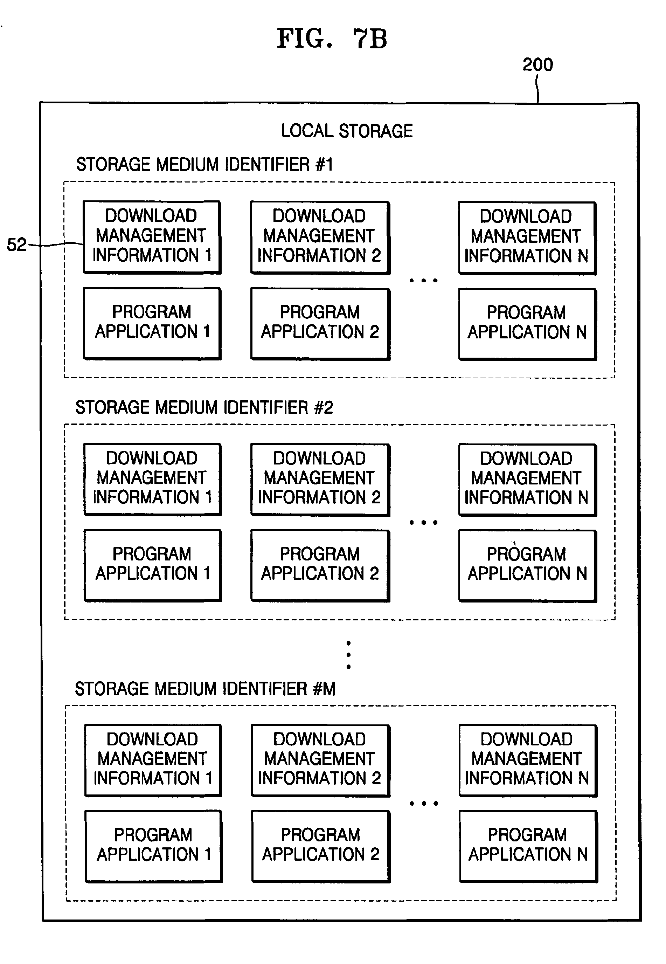

FIGS. 7A and 7B are diagrams illustrating examples of the format of program application data downloaded to a local storage of a moving image reproduction apparatus according to an exemplary embodiment of the present invention.

FIG. 7A illustrates the format of program application data downloaded to a local storage 200 from a storage medium 100 or from an external database 300 via a network. Referring to FIG. 7A, at least one downloaded program application and download management information 52 corresponding to the program application may be stored in the local storage 200 together with an identifier of a storage medium from which they are downloaded. The download management information 52, like the download management information 52A, 52B, or 52C described above with reference to FIGS. 4A through 5, includes download allowance information 521 and independent execution allowance information 522. Alternatively, the download management information 52 may include only the independent execution allowance information 522.

Referring to FIG. 7B, a plurality of downloaded program applications and a plurality of download management information 52 respectively corresponding to the program applications may be stored in a local storage 200 together with an identifier of a storage medium from which they are downloaded.

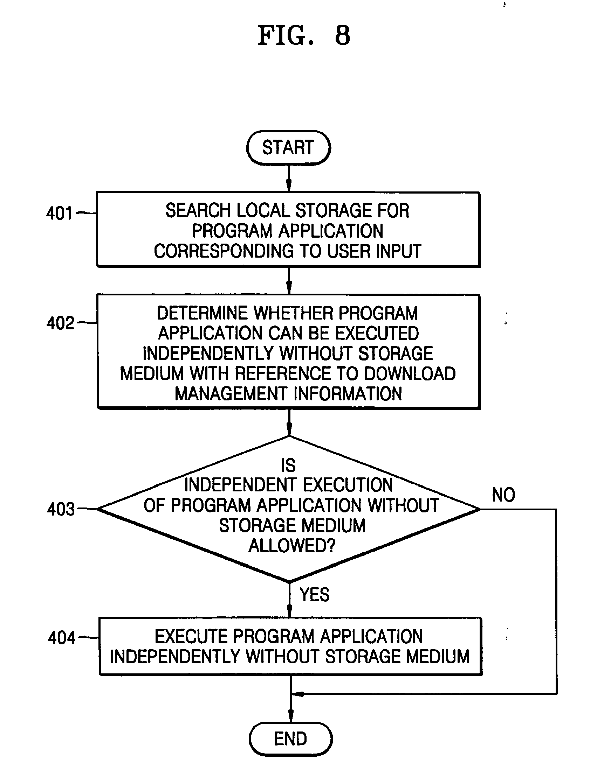

FIG. 8 is a flowchart illustrating a method of executing without a storage medium a program application downloaded to a local storage using download management information according to an exemplary embodiment of the present invention.
Referring to FIG. 8, in operation 401, a moving image reproduction apparatus searches its local storage 200 where a plurality of program applications are stored for a program application desired by a user. In operation 402, the moving image reproduction apparatus determines whether the desired program application can be executed independently without a storage medium with reference to download management information stored in the local storage 200 together with the desired program application. In operation 404, if the download management information is determined in operation 403 to indicate that independent execution of the desired program application is allowed, the moving image reproduction apparatus executes the desired program application. In operation 404, if the download management information is determined in operation 403 not to indicate that independent execution of the desired program application is allowed, the moving image reproduction apparatus notifies the user that the desired program application cannot be executed.

For example, the moving image reproduction apparatus may determine whether movie preview data and a Java application that operates in association with the movie preview data exist in an internet site established by a content manufacturer with reference to studio access information stored in a storage medium. Thereafter, the moving image reproduction apparatus may download the movie preview data and the Java application from the Internet site and store them in the local storage 200 together with download management information indicating whether the Java application can be executed independently without the storage medium.

When the storage medium is separated from the moving image reproduction apparatus, a module manager 104 of the moving image reproduction apparatus provides the user with a Java application list including a plurality of Java applications stored in the local storage 200 and executes one of the Java applications chosen by the user. Before the execution of the chosen Java application, the module manager 104 may determine whether the chosen Java application can be executed independently with reference to download management information corresponding to the chosen Java application. If the download management information corresponding to the chosen Java application indicates that the content manufacturer does not allow the independent execution of the chosen Java application, the moving image reproduction apparatus notifies the user that the chosen Java application cannot be executed because there is no approval from the content manufacturer. On the other hand, if the download management information corresponding to the chosen Java application indicates that the content manufacturer allows the independent execution of the chosen Java application, the moving image reproduction apparatus executes the chosen Java application. The chosen Java application may reproduce movie preview data using a movie preview file stored in the storage medium or may provide various additional services and functions, such as providing a game service or an advertisements service or providing a screen protection function, when executed.

An aspect of the present invention can be realized as computer-readable code written on a computer-readable recording medium. The computer-readable recording medium may be any type of recording device in which data is stored in a computer-readable manner. Examples of the computer-readable recording medium include a ROM, a RAM, a CD-ROM, a magnetic tape, a floppy disc, an optical data storage, and a carrier wave (e.g., data transmission through the Internet). The computer-readable recording medium can be distributed over a plurality of computer systems connected to a network so that a computer-readable code is written thereto and executed therefrom in a decentralized manner. Functional programs, code, and code segments needed for realizing an aspect of the present invention can be easily construed by one of ordinary skill in the art.

As described above, in an aspect of the present invention, a storage medium storing multimedia data for providing a moving image reproduction function and a programming function, which provides a user interaction function and/or other additional functions, and an apparatus and method for reproducing a moving image from the storage medium are provided.

Therefore, according to an aspect of the present invention, it is possible to independently execute a program application downloaded to a local storage from a storage medium or from an external database via a network by using download management information.

Although a few embodiments of the present invention have been shown and described, it would be appreciated by those skilled in the art that changes may be made in this embodiment without departing from the principles and spirit of the invention, the scope of which is defined in the claims and their equivalents.

## Claims

1. An apparatus reproducing a moving image from a storage medium in which reproduction mode data and program data are stored, the apparatus comprising:
a storage unit which stores the program data and download management information;
a reading unit which reads the program data and the management information from the storage unit; and
a reproduction unit which reproduces the program data with respect to the download management information.

2. An apparatus as claimed in claim 1, wherein the program data is downloaded from the storage medium or from a network.

3. An apparatus as claimed in claim 1 or 2, wherein the reproduction mode data are used for reproducing moving image data, and the program data are used providing a user interaction function and/or other additional functions using the moving image data, the apparatus comprising:
a storage unit which stores the program data downloaded from the storage medium or from a network and download management information indicating whether the downloaded program data is executed independently of the storage medium;
a reading unit which reads the downloaded program data and the download management information from the storage unit; and
a reproduction unit which reproduces the downloaded program data with reference to the download management information.

4. Apparatus as claimed in any of claims 1-3, wherein the download management information includes, download allowance information, indicating whether downloading of a program application from the storage medium to the storage unit of the apparatus is allowed, and independent execution allowance information, indicating whether independent execution of the program application downloaded to the local storage of the apparatus without the storage medium is allowed.

5. The apparatus of any of claims 1-4, wherein the reproduction unit comprises a module manager which controls a program engine to execute the downloaded program data without the storage medium if the download management information indicates that the downloaded program data is executed independently of the storage medium, an notifies a user that the downloaded program is not executed without the storage medium if the download management information indicates that the downloaded program data is not executed independently of the storage medium.

6. The apparatus of any of claims 1-5, wherein the download management information is included in application management information used for controlling the execution of the downloaded program data, and the application management information is included in the downloaded program data.

7. The apparatus of any of claims 1-6, wherein the download management information is stored separately from application management information used for controlling the execution of the downloaded program data, and the application management information is included in the downloaded program data.

8. A method of reproducing a moving image from a storage medium in which reproduction mode data, used for reproducing moving image data, and program data, used for providing a user interaction function and/or other additional functions using the moving image data, are stored, the method comprising:
searching a storage unit for program data, chosen by a user, the program data downloaded from the storage medium or from a network, and download management information indicating whether the downloaded program data is executed independently of the storage medium;
examining the download management information corresponding to the chosen program data in the storage unit; and
reproducing the chosen program data with reference to the download management information.

9. The method of claim 8, wherein the reproducing of the chosen program data comprises:
reproducing the chosen program data without the storage medium if the download management information corresponding to the chosen program data indicates that the chosen program data is executed independently of the storage medium ; and
controlling an apparatus for reproducing a moving image from a storage medium to notify the user that the chosen program data is not executed without the storage medium if the download management information corresponding to the chosen program data indicates that the chosen program data is not executed independently of the storage medium.

10. The method of claim 8 or 9, wherein the download management information corresponding to the chosen program data is included in application management information used for controlling the execution of the chosen program data, and the application management information is included in the chosen program data.

11. The method of any of claims 8-10, wherein the download management information corresponding to the chosen program data is stored separately from application management information used for controlling the execution of the chosen program data, and the application management information is included in the chosen program data.

12. A storage medium comprising:
reproduction mode data used for reproducing moving image data; and
program data used for providing a user interaction function and/or other additional functions using the moving image data,
wherein the program data comprises download management information indicating whether the program data is downloadable to a storage unit of an image reproduction apparatus for reproducing a moving image from the storage medium and whether, after downloaded to the storage unit, the program data is executed independently of the storage medium from which the program data is downloaded.

13. The storage medium of claim 12, further comprising system data used for controlling the execution of the reproduction mode data and the program data.

14. The apparatus of any of claims 1-7, wherein the download management information includes download allowance information indicating whether downloading of a program application from the storage medium to a local storage of the moving image reproduction apparatus is allowed and independent execution allowance information indicating whether independent execution of the program application downloaded to the local storage of the moving image reproduction apparatus without the storage medium is allowed.

15. The apparatus of claim 14, wherein the download allowance information indicates whether a content manufacturer allows the program application stored in the storage medium to be downloaded to the local storage of the moving image reproduction apparatus.

16. The apparatus of claim 14 or 15, wherein the independent execution allowance information indicates whether a content manufacturer allows the program application stored in the local storage of the moving mage reproduction apparatus to be executed independently of the storage medium.

17. The storage medium of claim 12 or 13, wherein the download management information is stored in a program application used for controlling execution of the downloaded program data, and the download management information indicates whether the downloaded program data is executed independently of the storage medium.

18. The storage medium of claim 12, 13 or 17, wherein the download management information includes download allowance information indicating whether downloading of a program application from the storage medium to a local storage of an image reproduction apparatus is allowed and independent execution allowance information indicating whether independent execution of the program application downloaded to the local storage of the image reproduction apparatus without the storage medium is allowed.

19. The storage medium of claim 18, wherein the download allowance information indicates whether a content manufacturer allows the program application stored in the storage medium to be downloaded to the local storage of the image reproduction apparatus.

20. The storage medium of claim 18 or 19, wherein the independent execution allowance information indicates whether a content manufacturer allows the program application stored in the local storage of the moving mage reproduction apparatus to be executed independently of the storage medium from which the program application is downloaded.

21. A storage medium comprising:
reproduction mode data used for reproducing moving image data; and
program data used for providing a user interaction function and/or other additional functions independently of the reproduction of the moving image data from the storage medium,
wherein the program data comprises download management information indicating whether the program data is downloadable to a storage unit of an apparatus for reproducing a moving image from the storage medium and whether, after downloaded to the storage unit, the program data is executed independently of the storage medium from which the program data is downloaded.

22. The storage medium of claim 21, wherein the download management information includes download allowance information indicating whether downloading of a program application from the storage medium to a local storage of the apparatus is allowed and independent execution allowance information indicating whether independent execution of a program application downloaded to the local storage of the apparatus without the storage medium is allowed.
